# EUROPEAN PATENT APPLICATION

(11) **EP 0 863 095 A1**
(43) Date of publication of application: **09.09.1998**
(21) Application number: 97203512.5
(22) Date of filing: 11.11.1997
(51) Int. Cl.: B65G 59/06

(54) **Unstacking device for unstacking a stack of containers**

(30) Priority: 11.11.1996 NL 1004494
(71) Applicant: Van Riet Machine- en Transportwerktuigenfabriek B.V., 3430 BD Nieuwegein (NL)
(72) Inventor: van Riet, Theodorus Petrus Maria, 3405 CL Benschop (NL)
(74) Representative: de Bruijn, Leendert C.

(57) **Abstract**

The invention relates to an unstacking device for unstacking a stack of containers, in particular plastic crates. The device comprises at least one pair of two endless belt conveyor systems (4) situated opposite each other and disposed vertically, the belt conveyor systems being movable away from and towards each other so that a stack of containers can be placed or wedged between them. The two belt conveyor systems can be driven so that they can convey in the downward direction with their parts facing each other at substantially the same speed, in such a way that a stack of containers wedged between the belt conveyor systems is lowered and the containers are delivered from the stack by the belt conveyor systems, layer by layer, at the bottom end of the belt conveyor systems. The vertical endless belt conveyors are disposed at a certain distance above a discharge conveyor (6), such as a belt or roller conveyor. The unstacking device is also provided with regulating means, comprising, inter alia, sensors for the purpose of ensuring that a layer is always delivered when the previous layer has been removed from underneath the stack wedged between the vertical belt conveyor systems.

## Description

The present invention relates to an unstacking device for unstacking a stack of containers, in particular plastic crates, also known as packing cases, and more particularly plastic crates which are stacked in layers into a more or less neat stack, in which each layer can consist of one container or a number of containers of equal height.

Unstacking devices for unstacking a stack of containers are known per se, although not on a large scale. In those cases the stack is generally a more or less chaotic stack, in which the containers are formed into a stack between two opposite side supports, or in a cage. The unstacking in that case is carried out there by removing one or more containers from the stack from the top by means of a gripper and depositing said container(s) at a deposit point, possibly on a belt conveyor system. Such a device is fairly complex and requires a relatively large amount of space for the movement of the gripper between the stack and the deposit point.

US-A-3,658,194 discloses a device for unstacking pans used in the baking trade. The unstacking device comprises two pairs of opposite, vertically disposed, endless belt conveyors which can be moved away from and towards each other, in order to be able to place or to wedge a stack of pans between them. The belt conveyors are also drivable in the downward direction, so that with their parts facing each other at essentially the same speed a stack of pans can be lowered and the pans delivered one by one at the bottom end of the stack. For placing a new stack of pans between the vertically disposed unstacking belt conveyors, a support is provided, which support can be taken by means of a cylinder/piston unit into and out of the outlet area of the vertical belt conveyors. The pans in each case have the same dimensions, in particular height dimensions, so that the pans can be unstacked by driving the vertical belt conveyors continuously in the downward direction.

DE-C1-4,126,328 discloses a device for separating individual roof tiles from a stack. This unstacking device comprises two parallel, vertically extending belt conveyors which can be moved towards and away from each other and can be driven stepwise, so that the lowering stack of roof tiles which has been placed from the top down between the belt conveyors delivers the roof tiles one by one to a discharge conveyor.

The present invention aims to provide an improved unstacking device for unstacking a stack of containers, in particular plastic crates. The invention aims in particular to provide an unstacking device which is simple in design, reliable and relatively easy to add to existing systems for handling containers. The present invention further aims to provide an unstacking device by means of which containers which have been stacked to a layered stack of layers with substantially constant height per layer can be unstacked in a reliable and simple manner.

To this end, the present invention provides an unstacking device for unstacking a stack of containers, in particular plastic crates, comprising at least one pair of two endless belt conveyor systems situated opposite each other and disposed vertically, the belt conveyor systems being movable away from and towards each other so that a stack of containers can be placed or wedged between them, and the two belt conveyor systems being drivable so that they can convey in the downward direction with their parts facing each other at substantially the same speed, in such a way that a stack of containers wedged between the belt conveyor systems is lowered and the containers are delivered from the stack by the belt conveyor systems, preferably layer by layer, at the bottom end of the belt conveyor systems. Such an unstacking device unstacks from the bottom, and for this reason is relatively simple to add to existing systems for handling the containers, by disposing the unstacking device according to the invention above a section of such a system. Of course, the unstacking device according to the invention can also be disposed above a conveyance system to be added to known systems for handling containers, such as a belt conveyor or a roller conveyor, or a further handling system. If the vertical belt conveyor systems disposed opposite each other are moved away from each other, a stack of containers which does not have to be supported in the peripheral direction can be placed between them here and wedged between the belt conveyor systems by moving said belt conveyor systems towards the stack of containers. Possibly after first lifting the stack of containers slightly by means of the belt conveyor systems, the stack of containers can then be unstacked by driving the belt conveyor systems in such a way that the parts facing each other, which wedge the stack of containers, convey in the downward direction at substantially the same speed, so that the stack of containers wedged between the facing parts is lowered. At the bottom end of the belt conveyor systems, when the stack has been lowered sufficiently for the purpose, the containers can then be delivered from the stack one by one, in layers, or at least in a metered manner. This delivery can be made to a further belt conveyor system, as already indicated earlier. As will be clear, the unstacking device according to the invention is very simple to achieve as regards design and can also be automated in a reliable way by a relatively simple drive, which can be achieved in many different ways. Placing a stack of containers between the belt conveyor systems which face each other can be a manual operation, but can also be automated or semi-automated.

According to an advantageous, space-saving embodiment, and in order to ensure the discharge of unstacked containers, it is advantageous according to the invention if the vertically disposed, endless belt conveyors are disposed with their bottom ends at a distance above a discharge conveyor, said distance being greater than the maximum height of the containers to be unstacked. By making the distance between the bottom end of the vertical belt conveyors and the discharge conveyor greater than the maximum height of the containers to be unstacked, which maximum height is generally known beforehand, it is ensured that the discharge of containers unstacked from the bottom is ensured at all times, irrespective of the direction in which said containers are discharged. The discharge of unstacked containers is in fact then not impeded by contact between unstacked containers and the bottom ends of the endless belt conveyors.

In order to ensure that unstacked containers cannot be partially placed on top of each other again, and thus also to ensure that a double layer of containers is not removed from the unstacking device, it is advantageous according to the invention for the unstacking device to be provided with regulating means which are equipped to drive the at least one pair of belt conveyor systems stepwise for lowering a stack accommodated between them, in such a way that at the moment of delivery of a layer of containers the layer of containers delivered before it is removed from underneath the respective pair of belt conveyor systems by the discharge conveyor. Such regulating means can comprise release sensors which emit a release signal as soon as a delivered layer of containers has been removed from underneath the respective pair of belt conveyor systems, whereupon the regulating means, in response to said release signal, can control the respective pair of belt conveyor systems for delivery of a following layer. In addition to the release sensors, but also separately therefrom, the regulating means can comprise unloading sensors which emit an unloading signal as soon as the respective pair of belt conveyor systems delivers a layer of containers, whereupon the regulating means, in response to said unloading signal, can bring the respective pair of belt conveyor systems to a standstill.

Possibly in addition to release sensors and/or unloading sensors, the regulating means can also be provided with a timer mechanism which ensures that between the delivery of the one layer and that of the next layer sufficient time elapses for complete removal of the delivered layer. In order to ensure a faultless operation, such a timer mechanism will generally be combined with one or more control sensors, for example the release sensors or unloading sensors mentioned earlier.

According to a particularly advantageous embodiment of the invention, two or more pairs of belt conveyor systems are disposed laterally, parallel to and next to each other, and means are provided for placing said two or more pairs of belt conveyor systems away from each other in the transverse direction of the belt conveyor systems after a stack has been picked up. With such an unstacking device it is possible to pick up as one unit a stack of containers consisting of two tower-like partial stacks which have been placed laterally against each other, and then to move them away from each other and unstack them independently of each other. Of course, stacks of more than two tower-like partial stacks can also be picked up simultaneously in this way and placed away from each other, so that they can be unstacked independently of each other. Many containers, such as plastic crates, are collected in such stacks made up of partial stacks and delivered to handling plants for, for example, filling the containers. The layer structure of the individual partial stacks in that case is often not the same as other partial stacks, with the result that such stacks made up of partial stacks are sometimes not as well handled or are even poorly handled by means of an unstacking device made up of one pair of belt conveyor systems, at any rate assuming that the whole stack is presented in one go to the unstacking device.

In order to be able to achieve the supply of stacks of containers to the unstacking device in a simple, not too complicated way, it is advantageous according to the invention if the discharge conveyor disposed underneath the at least one pair of belt conveyor systems discharges in a direction at right angles to the at least one belt conveyor system. In the case of such an arrangement the stacks of containers can in fact be placed in the transverse direction of the discharge conveyor between the belt conveyor systems, so that they can be unstacked by means of these belt conveyor systems.

In order to ensure good wedging of the stacks of containers without the wedging force exerted upon the containers in the process being very great, it is advantageous according to the invention if the belt conveyor systems are designed in such a way that the friction between the belt conveyors and the containers of the wedged stack is high, or at any rate sufficiently high. This can be achieved in an advantageous manner according to the invention if the belt conveyor systems are designed to be flexible, preferably elastically yielding, in the direction at right angles to the plane of conveyance. Under the influence of the wedging force, the belt conveyors will then be indented or depressed by the containers, with the result that the action of the belt conveyors upon the containers is sufficiently firm. This is very effective in particular in the case of containers in which the side faces in contact with the belt conveyors are irregular, in particular are provided with projecting edges, as in the case of so-called plastic crates.

According to an embodiment which is simple in terms of design and engineering, each belt conveyor system according to the invention is made up of at least two endless belts running parallel to each other. The endless belts of each belt conveyor system will then be able simultaneously to carry out a movement rotating in their peripheral direction. This can be achieved by driving one of the endless belts and by making the other endless belt free-running, but also by making both endless belts drivable as a pair.

In order to be able to unstack stacks of containers brought in on a carrier such as a portable platform, a pallet or a trolley, such as a so-called rolley or dolly, in an efficient manner by means of an unstacking device according to the invention, it is advantageous according to the invention if the unstacking device further comprises guide means for guiding a carrier for a stack of containers, which guide means are fitted in such a way that they can be moved into and out of the bottom outlet area of the at least one pair of belt conveyor systems. The guide means in that case can support the carrier with a stack of containers thereon until the moment when the carrier with the stack of containers is situated between the belt conveyor systems. The belt conveyor systems can then take hold of the stack of containers and lift the stack of containers off the carrier, after which the guide means with carrier and all can be removed from the outlet area of the pairs of belt conveyor systems, in order to permit unstacking of the stack of containers from the bottom. Such guide means can comprise, for example, rails which are designed to slide in and out telescopically.

According to an advantageous embodiment, the guide means are fitted on a carriage which can be moved to and fro underneath the first outlet, in a direction at right angles to the conveyance surface. With such a carriage, it is in fact possible to discharge the carrier when the stack has been taken off it, i.e. has been lifted by the belt conveyor systems, in a direction other than the direction of infeed (or the opposite direction) thereof, so that, on the one hand, an empty carrier is prevented from impeding the further infeed of a stack with carriers and, on the other hand, it is ensured that installations are not needed on opposite sides of the unstacking device for supplying (one side) and discharging (other side) of the carriers.

A further advantage of fitting the guide means on a carriage is that such a carriage can also be provided with vertical bars extending in the direction of travel of the carriage, which bars in the unstacking position of the carriage are situated underneath the bottom outlet of the belt conveyor systems, in such a way that said bars form a lateral guide for containers falling out of the stack. In this way, ordered delivery of the containers from the stack is ensured, while on the other hand, in particular if a number of parallel belt conveyor systems are disposed next to each other, it can be ensured that containers delivered by adjacent partial stacks cannot fall on top of one another, or fall underneath the outlet area of adjacent belt conveyor systems, or come into contact with each other.

The present invention also relates to a method for driving an unstacking device according to the invention.

The invention also relates in particular to the use of an unstacking device according to the invention for unstacking a stack of so-called plastic crates.

The present invention will be explained in greater detail below with reference to an exemplary embodiment shown in the drawing, in which:
Fig. 1 shows diagrammatically, in side view, an unstacking device according to the invention, in which a stack of containers has been placed between (two) belt conveyor systems, in order to be wedged between them;
Fig. 2 shows a diagrammatic top view of the unstacking device according to Fig. 1, in which the two belt conveyor systems disposed adjacent to each other are visible;
Fig. 3 shows a diagrammatic side view according to Fig. 1, but in this case the stack of containers has just been lifted off the carrier by the (two) belt conveyor systems;
Fig. 4 shows a diagrammatic side view corresponding to that of Figs. 1 and 3, but in this case the carrier on which the stack of containers has been supplied to the unstacking device has been removed from underneath the outlet area of the belt conveyor systems;
Fig. 5 shows a diagrammatic top view of the unstacking device according to the situation shown in Fig. 4;
Fig. 6 shows a diagrammatic side view of the unstacking device, largely corresponding to that of Figs. 1, 3 and 4, but in this case the stack has been partially unstacked; and
Fig. 7 shows a very diagrammatic top view of the outlet area of the pairs of vertical belt conveyor systems, which view comprises an example of the positioning of a number of sensors.

The unstacking device is indicated by 1 in the figures, which unstacking device in the exemplary embodiment shown in the figures consists of two pairs of two endless belt conveyor systems 2, 3 respectively per pair, situated opposite each other and disposed vertically. Each belt conveyor system 2, 3 in this case is made up of two endless conveyor belts 4, which for each belt conveyor system are placed parallel to and next to each other. The pairs of belt conveyor systems 2 and 3 can be moved away from each other laterally, for reasons explained further on, by means not shown, in such a way that the distance S between them can be made greater and smaller. Furthermore, the distance T between the belt conveyor systems 2 situated opposite each other and also the distance T between the belt conveyor systems 3 situated opposite each other are adjustable by means not shown, in order to make said distance T greater and smaller, which will be reverted to further on.

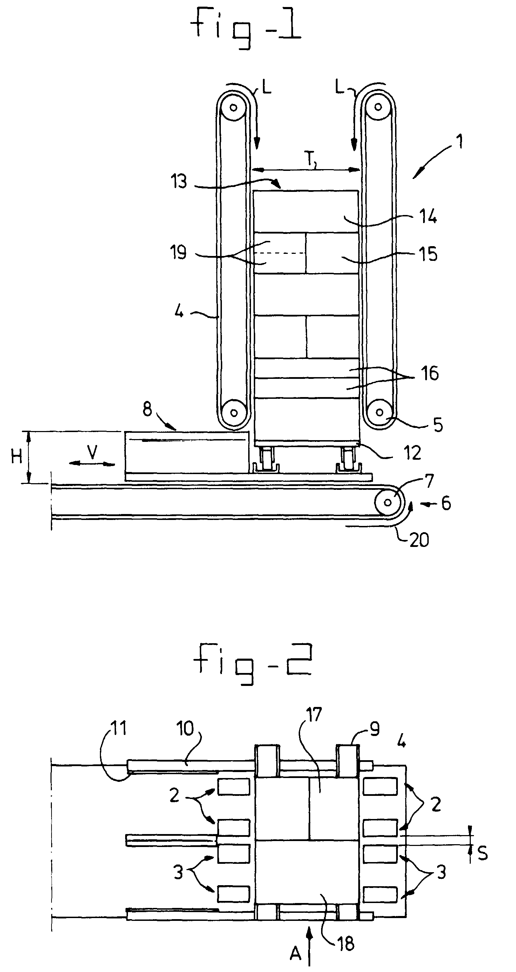

As can be seen further in the figures, a stack 13 of containers 14, 15, 16 can be placed between the belt conveyor systems 2, 3. The stack 13 in this case is made up of two adjacent partial stacks 17 and 18. As also emerges from the figures, each partial stack 17, 18 is made up of layers here, and the layer height per layer can vary as desired depending on the height of the one container or several containers situated in that layer. In the exemplary embodiment shown, the height of the containers 16 is approximately half the height of the containers 14 and also approximately half the height of the containers 15. The layer height of a layer formed by a container 16 is therefore then approximately half the layer height of a layer formed by the container 14 or of a layer formed by containers 15. Furthermore, a layer per se can be made up of a multiplicity of containers of equal height, such as, for example, a layer made up of two containers 15. It is, of course, conceivable, if desired, as indicated by dashed lines only in Fig. 1, for such a layer to consist of a container 15 and, for example, two containers 19, which together have a height equal to the height of container 15, but - as will become clear further on - this is less advantageous as regards unstacking, since it then becomes troublesome to ensure that there are no longer any plastic crates remaining on top of each other after the unstacking.

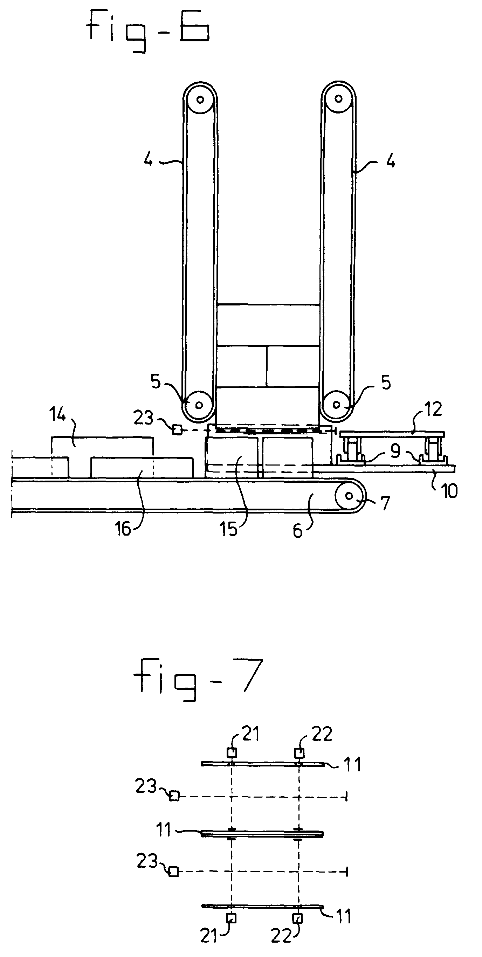

The partial stacks 17 and 18 can be fully independent of each other as regards their layer heights, in other words, the layer heights of the two partial stacks need not go up to the same level, and one partial stack can contain more layers than the other partial stack. Furthermore, the layer of one partial stack can be undivided, while an adjacent layer of the other partial stack is divided, as illustrated in particular in the top views of Figs. 2 and 5.

As can be seen in particular from Figs. 1 and 2, a stack of containers with two partial stacks is supplied simultaneously to a carrier, in this case a trolley or so-called rolley or dolly 12. Said trolley 12 is then driven according to arrow A by way of guide rails 9 between the pairs of belt conveyor systems 2 and 3. The rails 9 in this case are fitted on a carriage 8 which can be moved to and fro in the direction V, which makes it possible to remove the trolley 12 from underneath the bottom end of the pairs of belt conveyor systems. The carriage 8 here consists of a frame with carriers 10 on which the rails 9 are fitted and on which vertical bars 11 are mounted. If the carriage is moved to the right according to arrow V, then the bars 11 reach a position underneath the bottom ends of the pairs of belt conveyor systems with such a distance between them that containers coming from a partial stack can fall between them and, as it were, be guided by said bars, so that their orientation on the discharge conveyor 6 disposed underneath the vertically disposed endless belt conveyor systems is substantially controllable and defined. The distance H between the vertically disposed belt conveyor systems 2, 3 and the discharge conveyor 6 which is situated underneath them, and the direction of conveyance of which is indicated by arrow 20, is at least slightly greater than the maximum height of the containers 14, 15 or 16 contained in a stack, in such a way that containers unloaded from the stack, at the underside thereof, can be discharged by the discharge conveyor 6 without encountering obstacles.

The mode of operation and use of the unstacking device according to the invention will be explained in greater detail below, first roughly and then in more detail as regards the special embodiment.

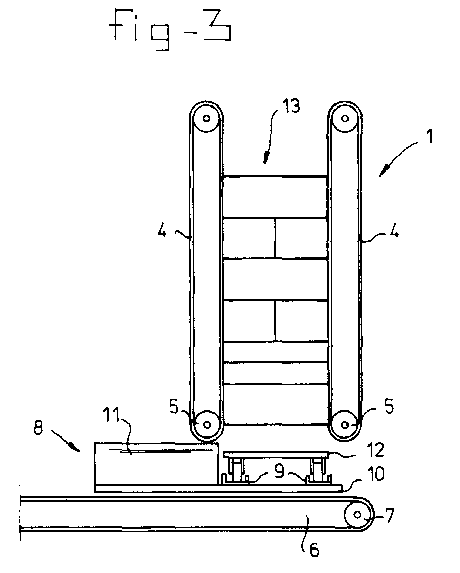

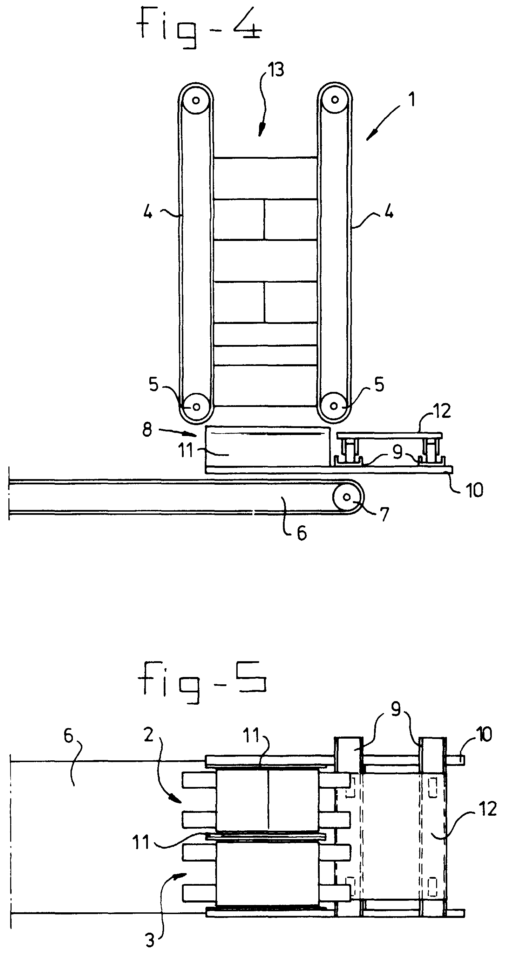

Roughly, the mode of operation is as follows here:
According to arrow A, a stack of containers, for example placed on a trolley 12, is placed between the opposite pairs of endless belt conveyor systems. If the distance T between the opposite pairs of belt conveyor systems is insufficient for accommodating a stack 13 with containers between them, the opposite pairs of belt conveyor systems are first moved away from each other, so that said distance T between them is sufficient for accommodating a stack 13 with containers between them. Figs. 1 and 2 show the situation in which a stack 13 of containers from partial stacks 17 and 18 is placed between opposite pairs of belt conveyor systems 2 and 3.
The endless belt conveyor systems of each pair situated opposite each other are then preferably moved simultaneously towards each other in order to reduce the distance T between them and to wedge the stack 13 from partial stacks 17 and 18 between the pairs of belt conveyor systems 2 and 3. Here, partial stack 17 is wedged between the pair of belt conveyor systems 2, and partial stack 18 is wedged between the pair of belt conveyor systems 3. The pairs of endless belt conveyor systems are then driven in the direction opposite to that of arrows L, in order to lift the stack 13 with containers 14, 15, 16 wedged between the pairs of belt conveyor systems 2, 3 off the trolley 12. This last situation is shown in Fig. 3.
The partial stacks 17 and 18 lifted as one stack 13 off the trolley 12 are then physically separated from each other by increasing the lateral distance S between adjacent pairs of belt conveyor systems. As a result of this physical separation, it becomes possible to unstack the partial stacks 17 and 18 entirely independently of each other. The drives of the pair of belt conveyor systems 2 and of the pair of belt conveyor systems 3 can therefore be totally independent of each other, and will therefore preferably be controllable independently of each other. After the partial stacks 17 and 18 lifted off the trolley 12 have been physically separated in this way, the carriage 8 is moved to the right according to the arrow V, so that the trolley 12 is moved away to the right from underneath the bottom end of the pairs of belt conveyor systems, and the vertical bars 11 are placed underneath the bottom ends of the pairs of vertically disposed belt conveyor systems, in order to serve as a guide for containers unloaded from the pairs of vertically disposed belt conveyor systems. This situation is shown in Figs. 4 and 5. It will be clear that if the guides 9 for the trolley 12 and the vertical bars 11 are not fitted on one carriage, the trolley 12 can just as easily be moved away from underneath the bottom end of the pairs of vertically disposed belt conveyor systems prior to the physical separation of the partial stacks 17 and 18.
When the unstacking device according to the exemplary embodiment shown has been taken into the situation shown in Figs. 4 and 5, the unstacking of the partial stacks 17 and 18 can begin. This unstacking proceeds roughly as follows for each pair of belt conveyor systems 2, 3 respectively disposed opposite each other:
The vertically disposed pair of endless belt conveyor systems 2 or 3 situated opposite each other is driven stepwise in the direction of the arrow L, in order to lower the stack of containers until the bottom layer between the opposite pair of vertically disposed belt conveyor systems falls out and, guided by the vertical bars 11, falls onto the discharge conveyor, which discharges to the left. The discharge conveyor 6, which is preferably driven continuously during the unstacking, will discharge the unloaded bottom layer to the left. The following layer, the layer following that, the layer following that etc. of the partial stack 17 or 18 is then unloaded. When both partial stacks 17 and 18 have been fully unstacked, the carriage 8 can then be moved to the left again, in order to place the guide rails 9 underneath the bottom end of the pairs of belt conveyor systems, the pairs of belt conveyor systems can be moved away from each other again in order to increase the distance T between them again, and the pairs of belt conveyor systems can be moved laterally towards each other again, in order to reduce the distance S between them. The sequence of these three steps can in principle be arbitrary. When these three steps have been carried out, the process described above, involving placing between the vertically disposed belt conveyor systems, wedging, lifting and unstacking of a stack of containers, can be repeated again.

In order to carry out the unstacking in a manner which ensures that the unloaded containers are completely unstacked from each other, and thus do not lie fully or half on top of each other, it is advantageous according to the invention if provision is made for regulating means to permit stepwise control of each pair of belt conveyor systems, preferably independently of each other, depending on signals emitted by sensors which indicate that a subsequent unstacking step can be carried out. Such sensors can in principle be fitted in order to detect divergent moments of the unstacking process. A moment which is very suitable is the moment at which the section of the discharge conveyor 6 situated underneath the bottom end of a pair of belt conveyor systems is free from containers. Such a moment can be detected by so-called release sensors. Such release sensors can be sensors of many different types, for example optical sensors, in the case of which whether or not a light beam is interrupted or is reflected is a measure of whether or not the conveyor is free. Such release sensors can be, for example, sensors 21, 22, as shown very diagrammatically in Fig. 7 in the top view of the discharge conveyor 6 with vertical bars 11. A further moment which is very suitable is the moment at which a container or a layer of containers is unloaded from a partial stack. This is easily detected by so-called unloading sensors 23, which can be fitted directly underneath the bottom end or at the bottom end or between the bottom end of an opposite pair of vertical belt conveyor systems.

It will be clear that many variants of the exemplary embodiment of an unstacking device according to the invention shown here are conceivable. The endless belt conveyor systems can consist of, for example, two opposite endless belt conveyors, instead of consisting of a number of opposite conveyor belts in each case. It is not absolutely necessary either for the belt conveyors or conveyor belts to be in the form of endless belt conveyors or conveyor belts. It is important that there should be a sufficient length of active belt conveyor or conveyor belt part present in order to permit wedging of the stack of containers between them.

It will also be clear to an average person skilled in the art that the means for moving the carriage, the means for altering the mutual distance S and the means for altering the mutual distance T can be achieved in many ways, which can be very obvious per se.

## Claims

1. Unstacking device for unstacking a stack of containers, in particular plastic crates, comprising at least one pair of two belt conveyor systems situated opposite each other and disposed vertically, the belt conveyor systems being movable away from and towards each other so that a stack of containers can be placed or wedged between them, and the two belt conveyor systems being drivable so that they can convey in the downward direction with their parts facing each other at substantially the same speed, in such a way that a stack of containers wedged between the belt conveyor systems is lowered and the containers are delivered from the stack by the belt conveyor systems, preferably layer by layer, at the bottom end of the belt conveyor systems.

2. Unstacking device according to Claim 1, in which the vertically disposed, endless belt conveyors are disposed with their bottom ends at a distance above a discharge conveyor, said distance being greater than the maximum height of the containers to be unstacked.

3. Unstacking device according to Claim 2, in which the unstacking device is provided with regulating means which are equipped to drive the at least one pair of belt conveyor systems stepwise for lowering a stack accommodated between them, in such a way that at the moment of delivery of a layer of containers the layer of containers delivered before it is removed from underneath the respective pair of belt conveyor systems by the discharge conveyor.

4. Unstacking device according to Claim 3, in which the regulating means comprise release sensors which emit a release signal as soon as a delivered layer of containers has been removed from underneath the respective pair of belt conveyor systems, whereupon the regulating means, in response to said release signal, can control the respective pair of belt conveyor systems for delivery of a following layer.

5. Unstacking device according to Claim 3 or Claim 4, in which the regulating means comprise unloading sensors which emit an unloading signal as soon as the respective pair of belt conveyor systems delivers a layer of containers, and in which the regulating means, in response to said unloading signal, can bring the respective pair of belt conveyor systems to a standstill.

6. Unstacking device according to one of the preceding claims, in which two or more pairs of said belt conveyor systems are disposed laterally, and in which means are provided for placing said two or more pairs of belt conveyor systems away from each other in the transverse direction of the belt conveyor systems after a stack has been picked up.

7. Unstacking device according to one of Claims 2-6, in which the discharge conveyor discharges in a direction at right angles to the at least one belt conveyor system.

8. Unstacking device according to one of the preceding claims, in which the belt conveyor systems are flexible in the direction at right angles to the conveyance face.

9. Unstacking device according to one of the preceding claims, in which each belt conveyor system is made up of at least two endless belts running parallel to each other.

10. Unstacking device according to one of the preceding claims, comprising guide means for guiding a carrier for a stack of containers, which guide means are fitted in such a way that they can be moved into and out of the bottom outlet area of the at least one pair of belt conveyor systems.

11. Unstacking device according to Claim 10, in which the guide means are fitted on a carriage which can be moved to and fro underneath the bottom outlet, in a direction at right angles to the conveyance surface.

12. Unstacking device according to Claim 11, in which the carriage is also provided with vertical bars extending in the direction of travel of the carriage, which bars in the unstacking state of the carriage are situated underneath the bottom outlet of the belt conveyor systems, in such a way that said bars form a lateral guide or boundary for containers falling out of the stack.

13. Method for driving an unstacking device according to one of the preceding claims.

14. Use of an unstacking device according to one of Claims 1-12, for unstacking a stack of plastic crates.

15. Unstacking device according to Claim 6, characterized in that the two or more pairs of belt conveyor systems can be driven independently of each other during the unstacking.

16. Unstacking device according to Claim 10, characterized in that the two belt conveyor systems situated opposite each other can be driven in the upward direction in order to be able to lift a stack of containers placed between them off the carrier.
